(19)

**Europäisches Patentamt**

**European Patent Office**

**Office européen des brevets**

(11) **EP 1 136 536 B1**

(12) **FASCICULE DE BREVET EUROPEEN**

(45) Date de publication et mention
de la délivrance du brevet:
**10.03.2004 Bulletin 2004/11**

(51) Int Cl.⁷: **C09J 123/02**, C09D 123/16

(21) Numéro de dépôt: **01400699.3**

(22) Date de dépôt: **16.03.2001**

(54) **Liant de coextrusion à base de polyéthylène métallocène cogreffé**

Klebstoff zur Koextrusion auf der Basis von gepfropften Mischungen die Metallocen Polyethylen enthalten

Adhesive for coextrusion based cografted metallocene polyethylene

(84) Etats contractants désignés:
**AT BE CH CY DE DK ES FI FR GB GR IE IT LI LU MC NL PT SE TR**

(30) Priorité: **24.03.2000 FR 0003797**

(43) Date de publication de la demande:
**26.09.2001 Bulletin 2001/39**

(73) Titulaire: **Atofina**
**92091 Paris La Défense (FR)**

(72) Inventeurs:
• **Robert, Patrice**
**27470 Serquigny (FR)**

• **Leroy, Christophe**
**92500 Rueil-Malmaison (FR)**
• **Pascal, Jérome**
**27800 Saint-Cyr de Salerne (FR)**

(56) Documents cités:
**EP-A- 0 742 236       EP-A- 0 791 628**
**EP-A- 0 802 207       EP-A- 1 022 310**
**WO-A-97/27259**

Remarques:
Le dossier contient des informations techniques présentées postérieurement au dépôt de la demande et ne figurant pas dans le présent fascicule.

**Description**

La présente invention concerne un liant de coextrusion à base de polyéthylène métallocène cogreffé et son utilisation pour faire une structure multicouche ainsi que la structure obtenue.

L'art antérieur EP 802 207 a déjà décrit des liants à base de polyéthylène métallocène et de polypropylène cogreffés. Dans cet art antérieur on cogreffe un mélange comprenant au moins un polyéthylène et au moins un polypropylène de façon à compenser l'augmentation de viscosité du polyéthylène par la baisse de viscosité du polypropylène sous l'effet de l'initiateur radicalaire de greffage. Ceci n'a donc rien à voir avec la présente invention dans laquelle on cogreffe un mélange de deux polyéthylènes.

L'art antérieur WO /97 27259 décrit un liant constitué de (a) un polyéthylène de type HDPE, LLDPE, VLDPE ou LDPE, (b) 5 à 35 % d'un polyéthylène métallocène greffé et (c) 0 à 35 % d'un élastomère, le polyéthylène métallocène n'est pas cogreffé.

EP-A-1 022 310 décrit une composition de 50-98 % EVOH, 1-50% polyéthylène et 1-10% d'un mélange de polyéthylène cogreffé.

EP-A-742 236 décrit une composition de polyéthylène haute densité et d'un copolymère de l'éthylène cogreffée.

Ces liants n'ont pas une tenue suffisante à chaud en particulier les emballages multicouches qui contiennent ces liants supportent mal les traitements thermiques et les sollicitations en température tels que par exemple la pasteurisation et le soudage à chaud.

L'avantage des liants de la présente invention est de bien résister à ces traitements thermiques et aux différents types de sollicitations en température. Un autre avantage des liants de la présente invention concerne leur fabrication. Ces liants sont préparés le plus souvent par greffage à l'état fondu et mélange aussi à l'état fondu et on récupère le liant sous forme de granulés à la sortie d'une extrudeuse ou de tout autre dispositif équivalent, la demanderesse a trouvé que cette granulation était beaucoup plus facile que pour les liants de l'art antérieur précédent.

La présente invention concerne un liant de coextrusion comprenant :

- 5 à 35 parties d'un polymère (A) lui-même constitué d'un mélange de 80 à 20 parties d'un polyéthylène métallocène (A1) de densité comprise entre 0,865 et 0,915 et de 20 à 80 parties d'un polyéthylène LLDPE (A2) non métallocène, le mélange de (A1) et (A2) étant cogreffé par un acide carboxylique insaturé, ou un dérivé fonctionnel de cet acide monomère de greffage ; et
- 95 à 65 parties d'un polyéthylène (B) choisi parmi les polyéthylènes homo ou copolymères et les élastomères ;

le mélange de (A) et (B) étant tel que :

- la teneur en acide carboxylique insaturé greffé est comprise entre 30 et $10^5$ ppm ;
- le MFI ou indice d'écoulement à l'état fondu (norme ASTM D 1238, à 190°C, sous 2,16 kg) est compris entre 0,1 et 10 g/10 min. ledit liant ne comprenant pas d'EVOH.

Selon un mode de réalisation du liant, la densité du polyéthylène (A2) est comprise entre 0,900 et 0,950.

Selon un mode de réalisation du liant, la proportion du monomère de greffage est de 600 à 5000 ppm par rapport au poids du mélange de (A1) et (A2) cogreffés.

Selon un mode de réalisation du liant, le polyéthylène (B) est un LLDPE de densité comprise entre 0,910 et 0,935.

L'invention est également relative à un liant de coextrusion constitué d'un mélange de 80 à 20 parties d'un polyéthylène métallocène (A1 ) de densité comprise entre 0,865 et 0,915 et de 20 à 80 parties d'un polyéthylène LLDPE (A2) non métallocène, le mélange cogreffé de (A1) et (A2) étant par un acide carboxylique insaturé ;
le mélange de (A1 ) et (A2) étant tel que :

- la teneur en acide carboxylique insaturé greffé est comprise entre 30 et $10^5$ ppm ;
- le MFI ou indice d'écoulement à l'état fondu (norme ASTM D 1238, à 190°C, sous 2,16 kg) est compris entre 0,1 et 10 g/10 min.

L'invention a également pour objet une structure multicouche comprenant une couche comprenant le liant de l'une quelconque des revendications précédentes et directement attachée à celle-ci une couche (E) :

- d'une résine polaire azotée ou oxygénée telle qu'une résine de polyamide, de polycétone aliphatique, de copolymère saponifié d'éthylène et d'acétate de vinyle (EVOH) ou de polyester, ou
- métallique.

Selon un mode de réalisation de la structure, est directement attachée, du côté du liant, soit une couche (F) de polyoléfine, soit une couche de résine choisie parmi les résines de la couche (E) soit une couche métallique.

L'invention a également pour objet un corps creux rigide constitué d'une structure telle que décrite précédemment.

L'invention concerne aussi une structure comprenant respectivement une couche de polyoléfine (F), une couche du liant défini ci-dessus, une couche d'une résine polyamide ou d'un copolymère saponifié d'éthylène et d'acétate de vinyle (EVOH), une couche du liant défini ci-dessus et une couche de polyoléfine (F).

Ces structures sont utiles pour fabriquer des emballages souples ou rigides tels que des sachets, des bouteilles ou des containers. On peut fabriquer ces emballages par coextrusion, lamination, coextrusion soufflage.

L'invention est aussi utile pour les tuyaux coextrudés et pour les réservoirs d'essence multicouches des automobiles.

L'invention va maintenant être décrite en détails.

S'agissant de (A1), on désigne par polyéthylène métallocène les polymères obtenus par copolymérisation d'éthylène et d'alpha oléfine telle que par exemple propylène, butène, héxène ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polyéthylènes métallocènes peuvent aussi être caractérisés par leur rapport $\overline{Mw}/\overline{Mn} < 3$ et de préférence $< 2$ dans lequel $\overline{Mw}$ et $\overline{Mn}$ désignent respectivement la masse molaire moyenne en poids et la masse molaire moyenne en nombre. On désigne aussi par polyéthylène métallocène ceux ayant un MFR(melt flow ratio ou rapport d'indice de fluidité) inférieur à 6,53 et un rapport $\overline{Mw}/\overline{Mn}$ supérieur à MFR moins 4,63. MFR désigne le rapport du $MFI_{10}$ (MFI sous une charge de 10 Kg) au $MFI_2$ (MFI sous une charge de 2,16 Kg). D'autres polyéthylènes métallocènes sont définis par un MFR égal ou supérieur à 6,13 et un rapport $\overline{Mw}/\overline{Mn}$ inférieur ou égal à MFR moins 4,63.

Avantageusement la densité de (A1) est comprise entre 0,870 et 0,900.

S'agissant du polyéthylène (A2), c'est un copolymère de l'éthylène et d'une alpha oléfine de type LLDPE (polyéthylène basse densité linéaire) qui n'est pas d'origine métallocène. Les alpha oléfines ont avantageusement de 3 à 30 atomes de carbone.

Des exemples d'alpha oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha oléfines peuvent être utilisées seules ou en mélange de deux ou de plus de deux.

La densité de (A2) est avantageusement comprise entre 0,900 et 0,950. Le MFI de (A2) est compris entre 0,1 et 8 g/10 min ( à 190 °C sous 2,16 Kg).

Le mélange de (A1 ) et (A2) est greffé avec un acide carboxylique insaturé, c'est-à-dire (A1) et (A2) sont cogreffés. On ne sortirait pas du cadre de l'invention en utilisant un dérivé fonctionnel de cet acide

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicydo (2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en $C_1$-$C_8$ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de (A1) et (A2). Le mélange peut contenir les additifs utilisés habituellement lors de la mise en oeuvre des polyoléfines à des teneurs comprises entre 10 ppm et 5 %, tels que les antioxydants à base de molécules phénoliques substituées, les agents de protections UV , les agents de mise en oeuvre tels que les amides gras, l'acide stéarique et ses sels, les polymères fluorés connus comme agents pour éviter les défauts d'extrusion , les agents anti- buée à base d'amines, les agents anti-bloquants tels que la silice ou le talc, les mélanges maîtres avec colorants, les agents nucléants entre autres.

Par exemple, ceci peut être réalisé en chauffant les polymères (A1 ) et (A2) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène entre autres. Des initiateurs de radicaux appropriés qui peuvent être utilisés comprennent le t-butyl-hydroperoxyde, cumène-hydroperoxyde, di-iso-propylbenzène-hydroperoxyde, di-t-butyl-peroxyde, t-butyl-cumyl-peroxyde, dicumylperoxyde, 1,3-bis-(t-butylperoxy-isopropyl)benzène, acétyl-peroxyde, benzoylperoxyde, iso-butyryl-peroxyde, bis-3,5,5-triméthyl-hexanoyl-peroxyde, et méthyléthyl-cétone-peroxyde.

Dans le mélange de (A1 ) et (A2) modifié par greffage obtenu de la façon susmentionnée, la quantité du monomère de greffage peut être choisie d'une façon appropriée mais elle est de préférence de 0,01 à 10 %, mieux de 600 ppm à 5000 ppm, par rapport au poids de (A1) et (A2) greffés.

La quantité du monomère greffé est déterminée par dosage des fonctions succiniques par spectroscopie IRTF. Le MFI de (A) c'est-à-dire de (A1) et (A2) ayant été cogreffés est avantageusement 0,1 à 10g/10min.

Quant au polyéthylène (B), il s'agit d'un polyéthylène homopolymère ou d'un copolymère de l'éthylène avec un monomère choisi parmi les alphaoléfines, les esters d'acides carboxyliques insaturés ou les esters vinyliques d'acides carboxyliques saturés. Les alpha oléfines ont été definies plus haut. Les esters d'acides carboxyliques insaturés sont par exemple les (méth)acrylates d'alkyle dont l'alkyle a de 1 à 24 atomes de carbone. Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle. Les esters vinyliques d'acides carboxyliques saturés sont par exemple l'acétate ou le propionate de vinyle. (B) peut être un polyéthylène HDPE, LDPE, LLDPE, VLDPE ou un PE métallocène.

(B) peut aussi être un polymère à caractère élastomérique, c'est-à-dire qu'il peut être un (i) élastomère au sens de ASTM D412, ce qui signifie un matériau qui peut être étiré à température ambiante à deux fois sa longueur, maintenu ainsi 5 minutes puis revenir à moins de 10 % près à sa longueur initiale après avoir été relâché ou (ii) un polymère n'ayant pas exactement les caractéristiques précédentes mais pouvant être étiré et revenir sensiblement à sa longueur initiale. A titre d'exemple on peut citer :

- les EPR (éthylène propylène rubber aussi designés EPM) et les EPDM (éthylène propylène diène),
- les élastomères styréniques tels que les SBR (styrène -butadiène-rubber), les copolymères blocs styrène/butadiène/styrène (SBS), les copolymères blocs styrène/éthylène/butadiène/styrène (SEBS) et les copolymères blocs styrène/isoprène/styrène (SIS).

Avantageusement, (B) est un polyéthylène LLDPE de densité comprise entre 0,910 et 0,935 ou bien un PEHD de densité comprise entre 0,935 et 0,950.

Avantageusement, les proportions de (A) et (B) sont respectivement 10 à 30 parties de (A) pour 90 à 70 de (B).

Selon une deuxième forme, l'invention concerne une composition constituée du seul mélange de (A1) et (A2) cogreffés destinée à être diluée dans un polyéthylène ou un élastomère (B). En effet, la demanderesse a découvert qu'on pouvait ajuster la concentration du liant final (c'est à dire mélange de (A) et (B)) selon les différents usages à partir de (A) par compoundage ou mélange de granulés avec (B).

Les liants de l'invention sont utiles pour les structures multicouches comme par exemple les films, les feuilles, les tubes et les corps creux tels que les réservoirs d'essence.

La structure multicouche de la présente invention comprend la couche comprenant le liant précédent, et une couche (E) de résine polaire oxygénée ou azotée, ou une couche métallique.

Des exemples de résines polaires préférées dans la couche autre que le liant sont les résines de polyamide, une polycétone aliphatique, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,1 0, PA-11, PA-6/6,6 et le PA-12 ; un copolymère saponifié d'éthylène et d'acétate de vinyle ayant un degré de saponification d'environ 90 à 100 % en moles, obtenu en saponifiant un copolymère éthylène/acétate de vinyle ayant une teneur en éthylène d'environ 15 à environ 60 % en moles ; des polyesters tels que le polyéthylène-téréphtalate, le polybutylène-téréphtalate, le polyéthylène naphténate , des mélanges de ces résines, ou encore des polyesters aromatiques comme les cristaux liquides polymères.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention. La couche de résine polaire oxygénée ou azotée (E) peut contenir également des additifs connus en quantité classique.

L'invention concerne aussi une structure comprenant respectivement une couche (F) de polyoléfine une couche du liant de l'invention et soit une couche (E) de résine polaire azotée ou oxygénée soit une couche métallique.

Les différentes couches des structures de l'invention peuvent contenir des additifs tels que des charges, des stabilisants, des agents glissants, des agents antistatiques, des ignifugeants.

Les structures de l'invention peuvent être fabriquées par des procédés connus de coextrusion, d'extrusion soufflage, de la technique des thermoplastiques.

Les **tableaux 1** et **2**, ci-dessous, regroupent des compositions de liants, les pourcentages étant des pourcentages en poids.

En comparant les valeurs de force de pelage du **tableau 1**, on constate que **l'exemple 4**, selon l'invention, a des propriétés adhésives à 23°C meilleures que les **comparatifs 2** et **3** et des propriétés adhésives identiques ou supérieures aux propriétés adhésives des **comparatifs 1 à 3** dans une gamme de températures allant de 50 à 90°C.

En comparant les valeurs de force de pelage du **tableau 2,** on constate que **l'exemple 8**, selon l'invention, a des propriétés adhésives à 23°C et 50°C meilleures que les **comparatifs 6** et **7** et des propriétés adhésives supérieures aux propriétés adhésives des **comparatifs 5 à 7** dans une gamme de températures allant de 70 à 90°C.

On conclue que le cogreffage d'un mélange des deux types de PE (métallocène et non métallocène) permet, par synergie, une amélioration des propriétés adhésives des liants.

## Tableau 1

| | | Comparatif 1 | Comparatif 2 | Comparatif 3 | Exemple 4 |
|---|---|---|---|---|---|
| Polymère (A) | | A1 greffé seul | A2 greffé seul | (A1 greffé)+(A2 greffé) | (A1 + A2) cogreffés |
| | Type de PE | Métallocène | LLDPE | (Métallocène)+(LLDPE) | (Métallocène + LLDPE) |
| | Densité | 0,870 | 0,920 | (0,870)+(0,920) | (0,870 + 0920) |
| | Comonomère | 1-octène | 1-butène | (1-octène)+(1-butène) | (1-octène + 1-butène) |
| | Composition | 100 % A1 | 100 % A2 | (50% A1)+(50% A2) | (50% A1+ 50% A2) |
| | Taux de greffage | 0,6 % | 0,7 % | 0,65 % | 0,7 % |
| | MFI (g/10min) 190°C - 2,16kg | 2,0 | 0,5 | 1,1 | 1,2 |
| | Proportion de (A) | 15 % | 15 % | 15 % | 15 % |
| Polyéthylène (B) | Type de PE | LLDPE | LLDPE | LLDPE | LLDPE |
| | Comonomère | 1-butène | 1-butène | 1-butène | 1-butène |
| | Densité | 0,910 | 0,910 | 0,910 | 0,910 |
| | Proportion de (B) | 85% | 85% | 85% | 85% |
| Résistance au pelage* (N/15mm) | T=23°C | 12,0 | 8,5 | 9,2 | 11,5 |
| | T=50°C | 8,3 | 4,8 | 5,6 | 8,3 |
| | T=70°C | 6,2 | 3,0 | 3,8 | 6,9 |
| | T=80°C | 4,2 | 2,2 | 2,9 | 6,0 |
| | T=90°C | 0 | 0,8 | 0,8 | 4,1 |

*test de pelage réalisé entre couche de liant et couche d'EVOH dans un film coextrudé comprenant 5 couches (PE/liant/EVOH/liant/PE avec PE de densité 0,935 et EVOH à 38% d'éthylène) d'épaisseurs en µm respectivement 80/10/10/10/80, à une température T et à une vitesse de pelage de 200mm/min.

EP 1 136 536 B1

## Tableau 2

| | | Comparatif 5 | Comparatif 6 | Comparatif 7 | Exemple 8 |
|---|---|---|---|---|---|
| Polymère (A) | | A1 greffé seul | A2 greffé seul | (A1 greffé)+(A2 greffé) | (A1 + A2) cogreffés |
| | Type de PE | métallocène | LLDPE | (Métallocène)+(LLDPE) | (Métallocène+LLDPE) |
| | Densité | 0,890 | 0,930 | (0,890)+(0,930) | (0,890 + 0,930) |
| | Comonomère | 1-octène | 1-butène | (1-octène)+(1-butène) | (1-octène + 1-butène) |
| | Composition | 100 % A1 | 100 % A2 | (50% A1)+(50% A2) | (50% A1+50% A2) |
| | Taux de greffage | 0,8 % | 0,7 % | 0,75 % | 0,7 % |
| | MFI (g/10min) 190°C - 2,16kg | 1,0 | 0,7 | 0,8 | 0,9 |
| | Proportion de (A) | 15 % | 15 % | 15 % | 15 % |
| Polyéthylène (B) | Type de PE | LLDPE | LLDPE | LLDPE | LLDPE |
| | Comonomère | 1-butène | 1-butène | 1-butène | 1-butène |
| | Densité | 0,920 | 0,920 | 0,920 | 0,920 |
| | Proportion de (B) | 85% | 85% | 85% | 85% |
| Résistance au pelage* (N/15mm) | T=23°C | 13,1 | 3,5 | 5,8 | 13,0 |
| | T=50°C | 9,4 | 3,2 | 4,6 | 9,2 |
| | T=70°C | 7,0 | 2,9 | 3,4 | 7,6 |
| | T=80°C | 5,0 | 2,4 | 2,6 | 6,2 |
| | T=90°C | 1,2 | 1,3 | 1,2 | 4,3 |

*test de pelage réalisé entre couche de liant et couche d'EVOH dans un film coextrudé comprenant 5 couches (PE/liant/EVOH/liant/PE avec PE de densité 0,935 et EVOH à 38% d'éthylène) d'épaisseurs en µm respectivement 80/10/10/10/80, à une température T et à une vitesse de pelage de 200mm/min.

**Revendications**

1. Liant de coextrusion comprenant :

   - 5 à 35 parties d'un polymère (A) lui-même constitué d'un mélange de 80 à 20 parties d'un polyéthylène métallocène (A1) de densité comprise entre 0,865 et 0,915 et de 20 à 80 parties d'un polyéthylène LLDPE (A2) non métallocène, le mélange de (A1) et (A2) étant cogreffé par un acide carboxylique insaturé, ou un dérivé fonctionnel de cet acide monomère de greffage ; et
   - 95 à 65 parties d'un polyéthylène (B) choisi parmi les polyéthylènes homo ou copolymères et les élastomères ;

   le mélange de (A) et (B) étant tel que :

   - la teneur en acide carboxylique insaturé greffé est comprise entre 30 et $10^5$ ppm ;
   - le MFI ou indice d'écoulement à l'état fondu (norme ASTM D 1238, à 190°C, sous 2,16 kg) est compris entre 0,1 et 10 g/10 min; ledit liant ne comprenant pas d'EVOH.

2. Liant selon la revendication 1 dans lequel la densité du polyéthylène (A2) est comprise entre 0,900 et 0,950.

3. Liant selon l'une quelconque des revendications précédentes dans lequel la proportion du monomère de greffage est de 600 à 5000 ppm par rapport au poids du mélange de (A1) et (A2) cogreffés.

4. Liant selon l'une quelconque des revendications précédentes dans lequel le polyéthylène (B) est un LLDPE de densité comprise entre 0,910 et 0,935.

5. Liant de coextrusion constitué d'un mélange de 80 à 20 parties d'un polyéthylène métallocène (A1 ) de densité comprise entre 0,865 et 0,915 et de 20 à 80 parties d'un polyéthylène LLDPE (A2) non métallocène, le mélange de (A1) et (A2) étant cogreffé par un acide carboxylique insaturé ;
   le mélange de (A1) et (A2) étant tel que :

   - la teneur en acide carboxylique insaturé greffé est comprise entre 30 et $10^5$ ppm ;
   - le MFI ou indice d'écoulement à l'état fondu (norme ASTM D 1238, à 190°C, sous 2,16 kg) est compris entre 0,1 et 10 g/10 min.

6. Structure multicouche comprenant une couche comprenant le liant de l'une quelconque des revendications précédentes et directement attachée à celle-ci une couche (E) :

   - d'une résine polaire azotée ou oxygénée telle qu'une résine de polyamide, de polycétone aliphatique, de copolymère saponifié d'éthylène et d'acétate de vinyle (EVOH) ou de polyester, ou
   - métallique.

7. Structure selon la revendication 6 dans laquelle est directement attachée, du côté du liant, soit une couche (F) de polyoléfine, soit une couche de résine choisie parmi les résines de la couche (E) soit une couche métallique.

8. Corps creux rigide constitué d'une structure selon l'une quelconque des revendications 6 à 7.

9. Liant selon la revendication 1 **caractérisé en ce que** le dérivé fonctionnel de l'acide est l'anhydride maléique.


**Patentansprüche**

1. Coextrusionsbindemittel, umfassend:

   - 5 bis 35 Teile eines Polymers (A), das seinerseits von einer Mischung aus 80 bis 20 Teilen eines metallozenen Polyethylens (A1) mit einer Dichte zwischen 0,865 und 0,915 und aus 20 bis 80 Teilen eines nicht metallozenen Polyethylens LLDPE (A2) gebildet ist, wobei die Mischung aus (A1) und (A2) mit einer ungesättigten Monomer-Pfropfcarbonsäure oder einem a funktionellen Derivat dieser Säure co-gepfropft wird; und

   - 95 bis 65 Teile eines Polyethylens (B), das unter den Homo- oder Copolymerpolyethylenen und den Elastomeren ausgewählt wird;

wobei die Mischung von (A) und (B) derart ist, dass:

- der Gehalt an gepfropfter ungesättigter Carbonsäure zwischen 30 und $10^5$ ppm liegt;

- der MFI oder Fließindex im geschmolzenen Zustand (Norm ASTM D 1238, bei 190 °C, unter 2,16 kg) zwischen 0,1 und 10 g/10 min liegt;

wobei dieses Bindemittel kein EVOH umfasst.

2. Bindemittel nach Anspruch 1, bei dem die Dichte des Polyethylens (A2) zwischen 0,900 und 0,950 liegt.

3. Bindemittel nach einem der vorhergehenden Ansprüche, bei dem der Anteil des Pfropfmonomers 600 bis 5000 ppm im Verhältnis zum Gewicht der Mischung aus den co-gepfropften (A1) und (A2) ausmacht.

4. Bindemittel nach einem der vorhergehenden Ansprüche, bei dem das Polyethylen (B) ein LLDPE mit einer Dichte zwischen 0,910 und 0,935 ist.

5. Coextrusionsbindemittel, das aus 80 bis 20 Teilen eines metallozenen Polyethylens (A1) mit einer Dichte zwischen 0,865 und 0,915 und aus 20 bis 80 Teilen eines nicht metallozenen Polyethylens LLDPE (A2) gebildet ist, wobei die Mischung aus (A1) und (A2) mit einer ungesättigten Carbonsäure co-gepfropft wird;
wobei die Mischung aus (A1) und (A2) derart ist, dass:

- der Gehalt an gepfropfter ungesättigter Carbonsäure zwischen 30 und $10^5$ ppm liegt;

- der MFI oder Fließindex im geschmolzenen Zustand (Norm ASTM D 1238, bei 190 °C, unter 2,16 kg) zwischen 0,1 und 10 g/10 min liegt.

6. Mehrschichtige Struktur, umfassend eine Schicht, die das Bindemittel nach einem der vorhergehenden Ansprüche umfasst, und direkt mit dieser verbunden eine Schicht (E):

- eines stickstoffhaltigen oder sauerstoffhaltigen Polarharzes, wie beispielsweise eines Polyamidharzes, eines aliphatischen Polyketonharzes, eines verseiften Ethylen- und Vinylacetat- (EVOH) oder Polyestercopolymerharzes, oder

- aus Metall.

7. Struktur nach Anspruch 6, bei der auf der Seite des Bindemittels direkt entweder eine Schicht (F) aus Polyolefin oder eine Harzschicht, die unter den Harzen der Schicht (E) ausgewählt wird, oder eine Metallschicht aufgebracht ist.

8. Starrer Hohlkörper, der von einer Struktur nach einem der Ansprüche 6 bis 7 gebildet ist.

9. Bindemittel nach Anspruch 1, **dadurch gekennzeichnet, dass** das funktionelle Derivat der Säure Maleinanhydrid ist.

**Claims**

1. Coextrusion tie comprising:

- 5 to 35 parts of a polymer (A) which itself consists of a blend of 80 to 20 parts of a metallocene polyethylene (A1) of density between 0.865 and 0.915 and of 20 to 80 parts of a non-metallocene LLDPE polyethylene (A2), the blend of (A1) and (A2) being cografted by an unsaturated carboxylic acid or a functional derivative of this acid, grafting monomer, and
- 95 to 65 parts of a polyethylene (B) chosen from ethylene homopolymers or copolymers and elastomers; the blend of (A) and (B) being such that:

- the content of grafted unsaturated carboxylic acid is between 30 and $10^5$ ppm,
- the MFI or melt flow index (ASTM D 1238 standard: 190°C/2.16 kg) is between 0.1 and 10 g/10 min; the said tie not comprising EVOH.

2. Tie according to Claim 1, in which the density of the polyethylene (A2) is between 0.900 and 0.950.

3. Tie according to either of the preceding claims, in which the proportion of the grafting monomer is from 600 to 5 000 ppm with respect to the weight of the blend of cografted (A1) and (A2).

4. Tie according to any one of the preceding claims, in which the polyethylene (B) is an LLDPE of density between 0.910 and 0.935.

5. Coextrusion tie consisting of a blend of 80 to 20 parts of a metallocene polyethylene (A1) of density between 0.865 and 0.915 and of 20 to 80 parts of a non-metallocene LLDPE polyethylene (A2), the blend of (A1) and (A2) being cografted by an unsaturated carboxylic acid;
the blend of (A1) and (A2) being such that:

- the content of grafted unsaturated carboxylic acid is between 30 and $10^5$ ppm;
- the MFI or melt flow index (ASTM D 1238 standard: 190°C/2.16 kg) is between 0.1 and 10 g/10 min.

6. Multilayer structure comprising a layer which comprises the tie according to any one of the preceding claims and, directly attached to the said layer, a layer (E)

- of a nitrogen-containing or oxygen-containing polar resin, such as a polyamide resin, an aliphatic polyketone resin, a saponified ethylene/vinyl acetate copolymer resin (EVOH) or a polyester resin, or
- of a metal.

7. Structure according to Claim 6, in which either a polyolefin layer (F), or a layer of a resin chosen from the resins of the layer (E) or a metal layer is directly attached on the tie side.

8. Rigid hollow body consisting of a structure according to either of Claims 6 and 7.

9. Tie according to Claim 7, **characterized in that** the functional derivative of the acid is maleic anhydride.